# EUROPEAN PATENT SPECIFICATION

(11) **EP 2 842 234 B1**
(45) Date of publication and mention of the grant of the patent: **23.08.2017**
(21) Application number: 13781227.7
(22) Date of filing: 22.04.2013
(51) Int. Cl.: H04B 1/40, H01Q 1/22, H04W 88/08, H04B 1/38, H04B 1/3805

(54) **FLEXIBLE UNIFIED ARCHITECTURE FOR POINT-TO-POINT DIGITAL MICROWAVE RADIOS**
FLEXIBLE VEREINHEITLICHTE ARCHITEKTUR FÜR DIGITALEN PUNKT-ZU-PUNKT-MIKROWELLENFUNK
ARCHITECTURE UNIFIÉE SOUPLE POUR DES RADIOS HYPERFRÉQUENCES NUMÉRIQUES POINT-À-POINT

(30) Priority: 24.04.2012 US 201261637788 P
(43) Date of publication of application: 04.03.2015
(73) Proprietor: ZTE USA, INC., Richardson, TX 75080 (US)
(72) Inventor: SHEN, Ying, Chapel Hill, NC 27514 (US); NEALIS, Edwin, Cary, NC 27513 (US); SEMENYSHEV, Aleksandr, Apex, NC 27502 (US); SCHMID, William, Holly Spring, NC 27540 (US); WALSH, Shawn, Cary, NC 27519 (US); NGUYEN, Thanh, Cary, NC 27519 (US); KOCHETKOV, Andrey, Cary, NC 27519 (US); YOM, Dong, Hong, Cary, NC 27519 (US)
(74) Representative: Awapatent AB
(86) International application number: PCT/US2013/037610
(87) International publication number: WO 2013/163093

(56) References cited:
- EP-A2- 1 404 024
- US-A- 5 760 749
- US-A1- 2003 027 530
- US-A1- 2003 152 140
- US-A1- 2004 203 528
- US-A1- 2005 123 074
- US-A1- 2010 080 151
- US-A1- 2010 285 758
- US-A1- 2012 093 100

## Description

### TECHNICAL FIELD

The presented invention relates to wireless communications and, in particular, to a flexible unified architecture for point-to-point digital microwave radios.

### BACKGROUND

The fourth-generation (4G) wireless networks represent the next wave of mobile multimedia networks currently in development and the 4G Long Term Evolution (LTE) mobile networks are becoming a reality. Among others, the backhaul point-to-point microwave radios is a key part of this whole 4G network and plays an important role to the network success.

Point-to-Point Microwave Radios have a very wide range of frequency bands, typical licensed bands include 6GHz, 7GHz, 8GHz, 10GHz, 11GHz, 13GHz, 15GHz, 18GHz, 23GHz, 26GHz, 28GHz, 32GHz, 38GHz and 42GHz, plus unlicensed bands at sub 6GHz, 60GHz and the latest light license band of E-band (71-86GHz). The covered modulations include QPSK, 16QAM, 32QAM, 64QAM, 128QAM, 256QAM and extends to latest 512QAM and 1024QAM, and future even higher modulation such as 2048QAM and 4096QAM. The covered bandwidth includes popular international bandwidth of 3.5MHz/7MHz/14MHz/28MHz/56MHz and North America's FCC bands of 5MHz/10MHz/20MHz/30MHz/40MHz/50MHz and coming new 112MHz, 250MHz and 500MHz channel bandwidths.

In order to support these different radio configurations, frequency bands, modulations, capacity offerings, it is becoming more and more important to develop a point-to-point microwave radio with common mechanics, common interface to antenna, common software, and common automatic test equipment (ATE) for achieving such goals as low cost of deployment and maintenance and short time to market, etc. Moreover, both the operators and equipment vendors/manufacturers also prefer that their microwave equipment complies with a flexible unified architecture that supports various platforms, which is scalable, interchangeable, and shares common elements for all capacities and frequency bands.

US2003/027530 A1 discloses a highly integrated planar stacked millimeter wave transceiver.

US2010/285758 A1 discloses an integrated orthomode transducer.

US2010/080151 A1 discloses a multiple-antenna device having an isolation element.

EP1404024 A2 discloses an outdoor radio equipment.

### SUMMARY

According to some implementations, a transceiver used in a radio unit for wireless communication is disclosed according to Claim 1.

According to some implementations, a split-mount radio unit is disclosed according to Claim 7.

### BRIEF DESCRIPTION OF THE DRAWINGS

Different aspects of the present invention as well as features and advantages thereof will be more clearly understood hereinafter as a result of a detailed description of implementations of the present invention when taken in conjunction with the accompanying drawings, which are not necessarily drawn to scale. Like reference numerals refer to corresponding parts throughout the several views of the drawings.
FIG. 1 depicts a block diagram of a typical split-mount radio unit (SRU).
FIG. 2 depicts a block diagram of a typical all-outdoor radio unit (AOU).
FIG. 3 depicts a more detailed block diagram of the SRU according to some implementations of the present invention.
FIG. 4 depicts a more detailed block diagram of the AOU according to some implementations of the present invention.
FIG. 5 depicts a simplified cross-sectional view of the SRU according to some implementations of the present invention.
FIG. 6 depicts a simplified exploded view of the SRU according to some implementations of the present invention.
FIG. 7 depicts a simplified cross-sectional view of the AOU according to some implementations of the present invention.
FIG. 8 depicts a simplified exploded view of the AOU according to some implementations of the present invention.
FIG. 9 depicts the top and bottom of a transceiver and the position of the connector for use in the SRU and AOU according to some implementations of the present invention.
FIG. 10 depicts a block diagram of RF components control software according to some implementations of the present invention.
FIG. 11 depicts a block diagram illustrating a process of the RF components control software tuning with different bandwidth/modulation profiles for different system configurations according to some implementations of the present invention.
FIG. 12 depicts a flow chart illustrating a testing and integration workflow for both the SRU and the AOU according to some implementations of the present invention.

### DESCRIPTION OF EMBODIMENTS

Reference will now be made in detail to implementations, examples of which are illustrated in the accompanying drawings. In the following detailed description, numerous non-limiting specific details are set forth in order to assist in understanding the subject matter presented herein. It will be apparent, however, to one of ordinary skill in the art that various alternatives may be used without departing from the scope of the present invention and the subject matter may be practiced without these specific details.

The point-to-point microwave radios in its path transition from all indoor radios, to split mount radios and now to all outdoor radios. In the past, most radios used in Point to Point microwave wireless were comprised of radio units that were mounted indoors. These radios hardware platforms required radios that were rack mounted indoors and had to use large coax or Elliptical Waveguide running out from the indoor radio unit up the tower (or to the roof top), connecting the antenna. The industry later came out with a split-mount design radio system consisting of an indoor modem unit "IDU" and an outdoor RF Unit "ODU" that mounts the actual radio RF component hardware directly onto the back of the antenna. Today the industry has migrated to All Outdoor radio Unit systems "AOU" comprised of a single outdoor unit mounted to the back of the antenna. These AOU's contain the RF components, modems, and network interface. The connection between the AOU and the network switch is typically outdoor shielded twisted pair (CAT-5e) or fiber. The AOU design has far greater advantages over the indoor radio or IDU+ODU spit mount designs.

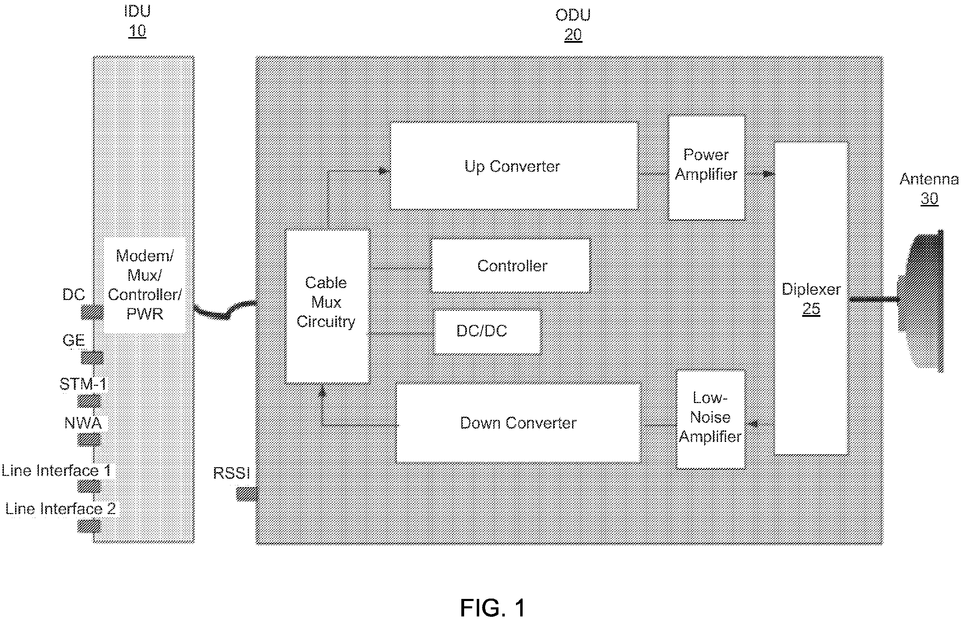

FIG. 1 depicts a block diagram of a conventional split-mount radio unit (SRU), including three basic parts: an indoor unit 10 (IDU), an outdoor unit 20 (ODU) and an antenna 30. IDU 10 is typically composed of a modem, various mux circuitries, a controller, a power module and various line interfaces. The connection between IDU 10 and ODU 20 is through a cable such as an RG-8 cable of a length ranging from a few feet up to 1000 feet. ODU 20 includes a cable mux circuitry, which splits a signal into a transmitter IF signal, a receiver IF signal, telemetry and DC signals. An up-converter converts the transmitter IF signal into a small RF signal; a power amplifier then amplifies the small RF signal to a larger RF signal. A waveguide diplexer 25 then transmits the RF signal to the antenna 30. On the receiver side, the antenna 30 receives a RF signal and transmits the RF signal through a low noise amplifier and a down-converter into a receiver IF signal. The receiver IF signal then arrives at IDU 10 through the cable mux circuitry for further signal process. IDU 10 has various customer interfaces, network process/management access, battery DC connection, and standard IP and TDM access ports.

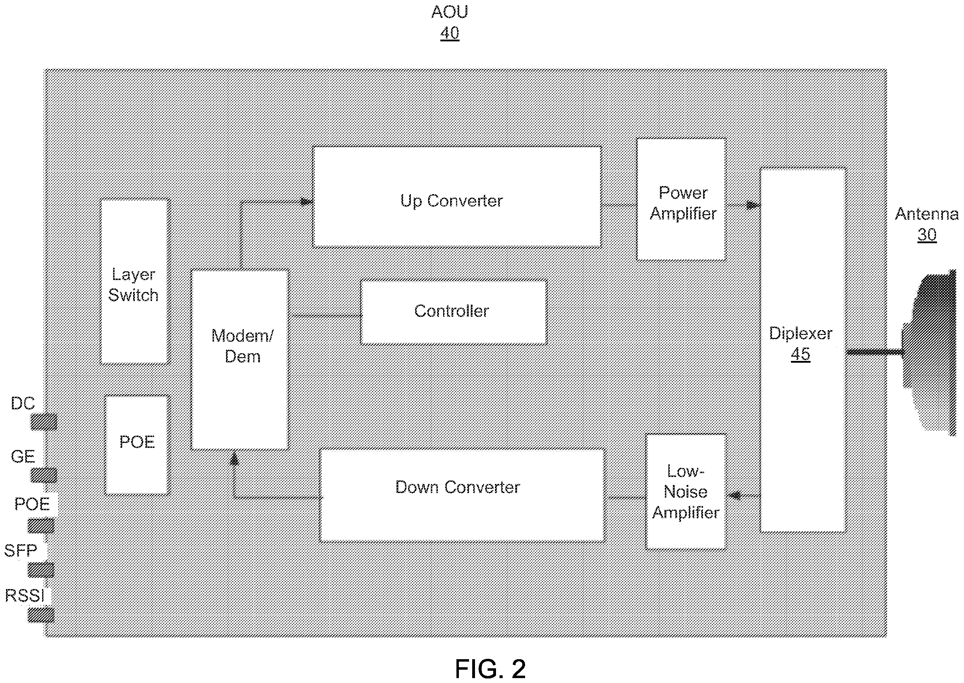

FIG. 2 depicts a block diagram of a typical all-outdoor radio unit 40 (AOU). AOU 40 integrates modem, mux, controller into one unit. Since AOU 40 is an outdoor unit, it supports a standard IP Ethernet interface with power over Ethernet (POE) feature and supports optional fiber interface. AOU 40 also has an RSSI port for antenna alignment purpose.

An effective design for both SRU and AOU becomes a challenge for all radio equipment vendors. This invention discloses many ideas for both product families, SRU and AOU, so as to share design, hardware, software, calibration, test flow, test stations, antenna interface, and mounting mechanics etc., and reduce the design, manufacturing and time to market cycles.

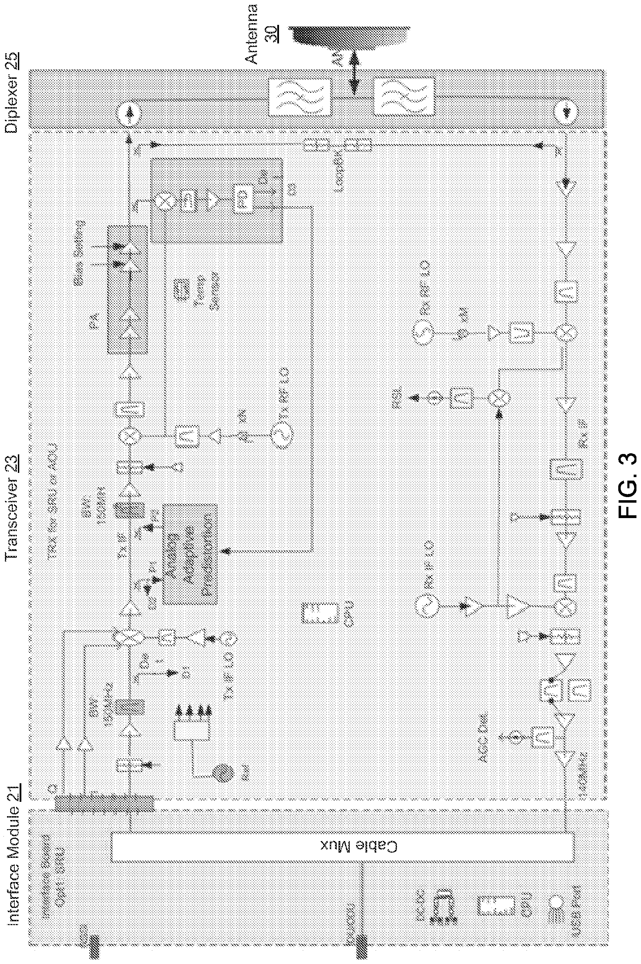

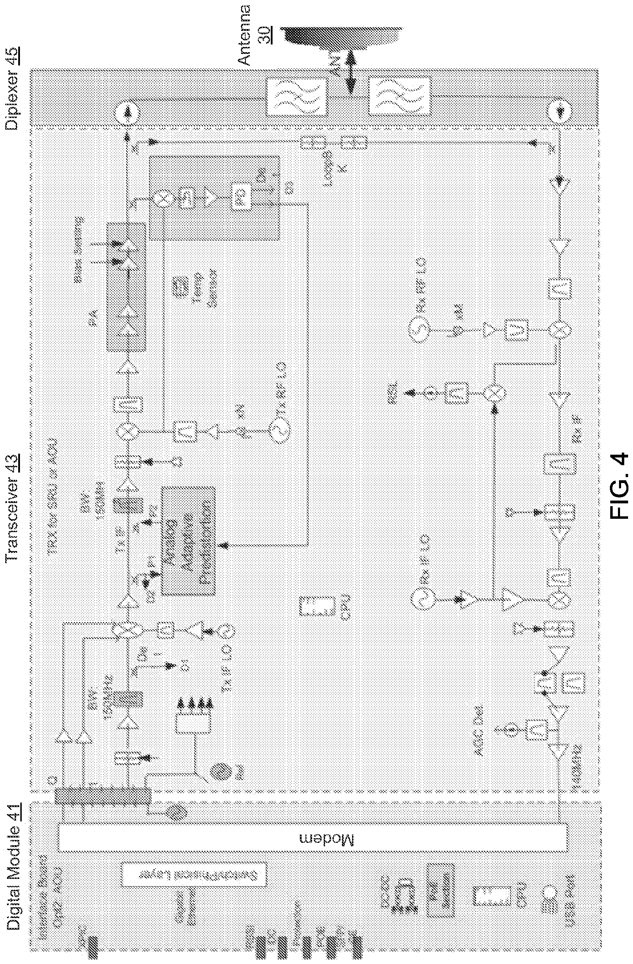

FIG. 3 depicts a more detailed block diagram of the SRU according to some implementations of the present invention. In some implementations, the radio unit includes three basic modules: a diplexer 25, a transceiver 23 and an interface card 21. As shown in FIG. 4, the SRU and the AOU share the same transceiver and diplexer. The only change in the AOU is to change the interface card 21 to a digital card 41.

Note that the transceiver, as a key module for both product families (SRU and AOU), has the following features:
a. Transceiver supports both I/Q and Tx IF interfaces. In the AOU, the transceiver uses I and Q signals. In the SRU, the transceiver uses Tx IF signal.
b. Transceiver has a total of three detectors in the transmitter chain, D1, D2 and D3. D1 is used for automatic gain control for cable compensation in the SRU application and it is not in the AOU application. D2 is used as an envelope detection for auto signal quality adaptive adjustment in the AOU application and as an additional signal detection in the SRU application. D3 uses mixing down feature for power amplifier (PA) detection and alarm purposes in both applications.
c. Transceiver supports both open loop digital pre-distortion (DPD) and analog adaptive pre-distortion (APD) feature. All the filters in the transmitter chain have 2.5 time wider bandwidth than the signal bandwidth to support open loop DPD. The parameters needed for open loop DPD are characterized through calibration, then applies the polynomial parameters to the modem look up table (LUT) to correct and improve the non-linearity from the PA. APD is achieved through two couplers, P1, P2 and a coupled down converted signal after the PA, in the transmitter chain, to a customized IC to achieve the improvement for the non-linearity from the PA.
d. The PA has the bias setting control capability to support reduced bias during low power level to support general "Green" application.
e. On the receiver side, the receiver signal level (RSL) chain uses a mixing mechanism and converter RF signal to the same Rx IF as the main signal, then uses a narrow band filter to reject interference signal to have a better signal indication accuracy.
f. The transceiver supports RF loopback capabilities. The loopback chain includes three couplers, two RF pads and a diode voltage controlled switch. When loopback commend is off, the diode switch is in high attenuation mode, and when the loopback commend is on, diode switch attenuation will be from high to low. RF loopback provides the radio to having a self-diagnosis capability.
g. Transceiver supports on-board local reference or a reference from digital board or from the IDU for future hitless and coherent applications.

In some implementations, a common transceiver is used for SRU and AOU.

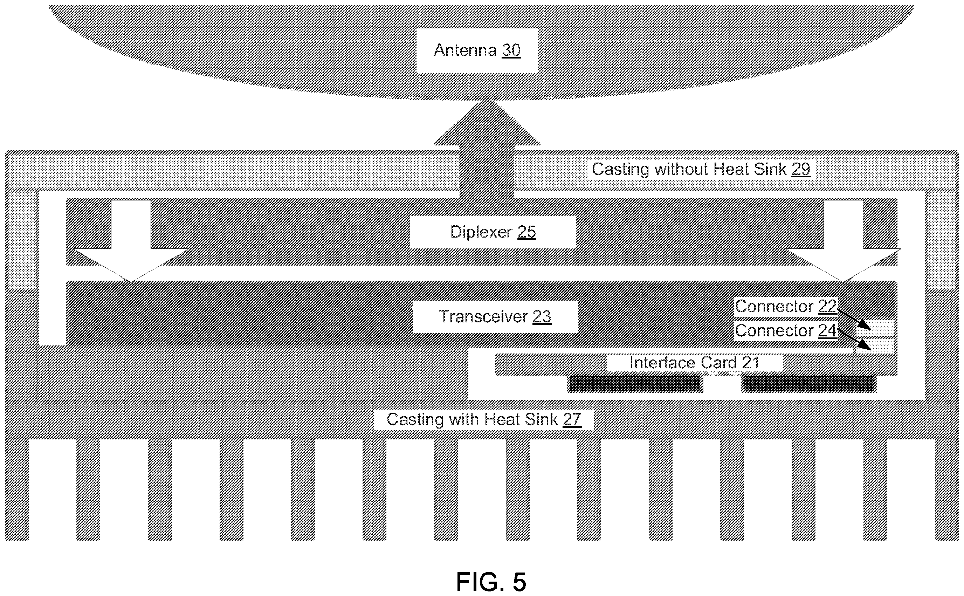

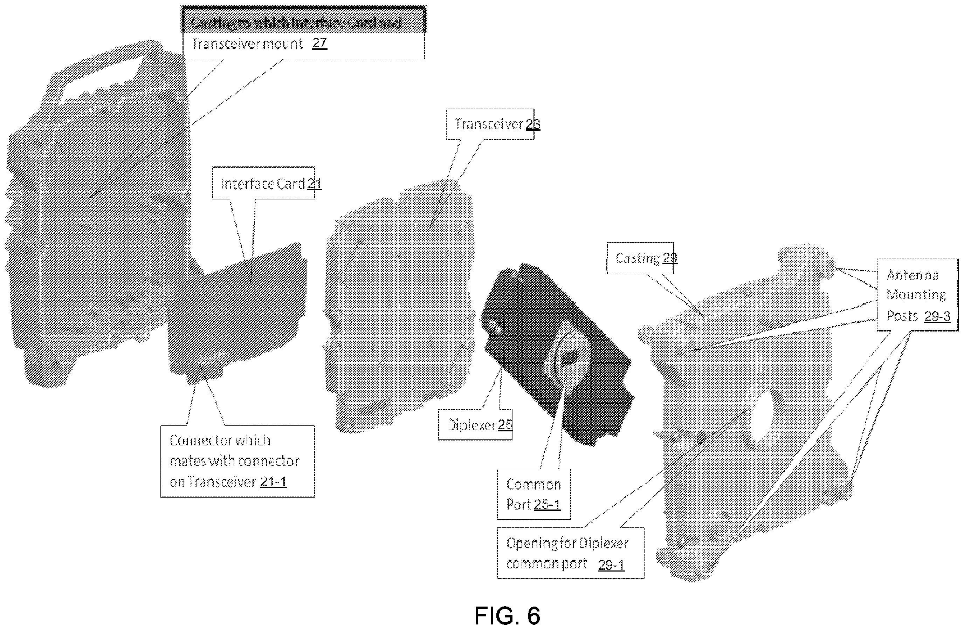

FIG. 5 depicts a simplified cross-sectional view of the SRU according to some implementations of the present invention. The transceiver 23 is mounted to a casting 27 for heat sinking. The interface card 21 is mounted to the same casting 27 as the transceiver 23. The transceiver 23 and the interface card 21 are connected through a pair of mating connectors 22 and 24. One connector 24 of the pair is installed on the top of the interface card 21 and the other connector 24 is installed on the bottom of the transceiver 23. Further detail can be seen in FIG. 6 that is an exploded view of the SRU shown in FIG. 5.

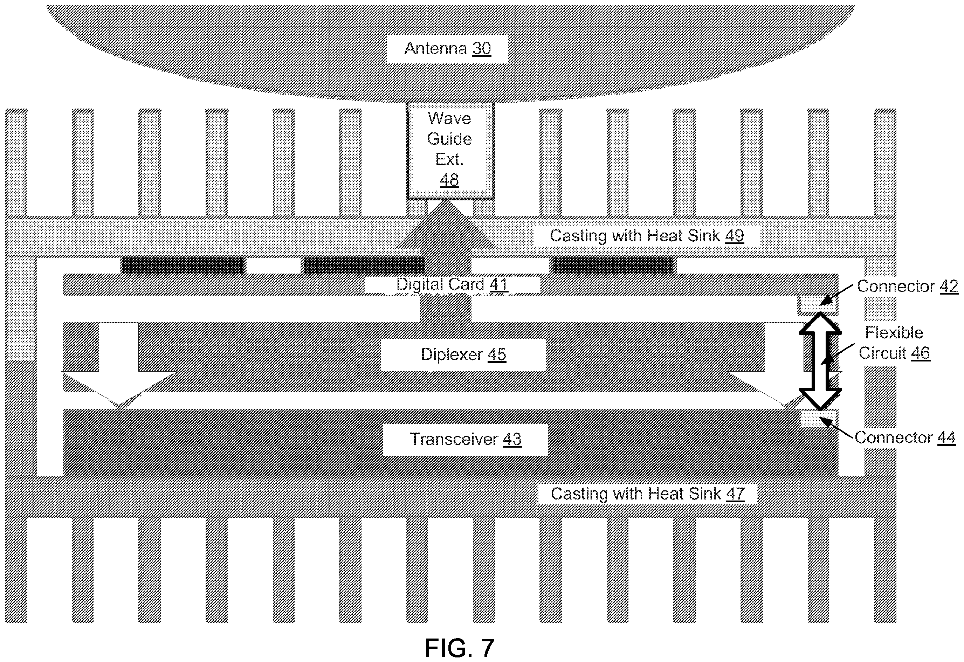

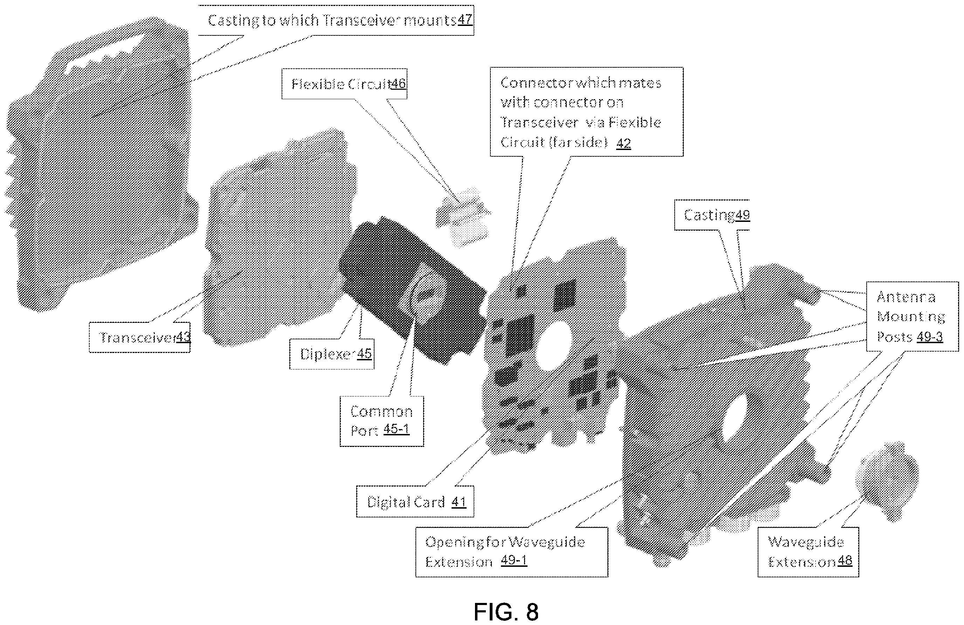

FIG. 7 depicts a simplified cross-sectional view of the AOU according to some implementations of the present invention. The transceiver 43 is mounted to a casting 47 for heat sinking as in the SRU. In the AOU, the digital card 41 is mounted to its own casting 49 for heat sinking. Since the digital card 41 is larger than the interface card 21 and generates much more heat, it cannot be mounted to the same casting as the transceiver 43. To simplify the connection between the transceiver 43 and the digital card 41, the connector 44 on the transceiver 43 is relocated from the bottom of the transceiver 43 to the top of the transceiver 43. There is a dual footprint for the connector 44 with one footprint on the bottom to be utilized when the transceiver 43 is installed in an SRU and with one footprint on the top to be utilized when the transceiver 43 is installed in an AOU. A flexible circuit 46 (represented by the white double-sided arrow) is used in the AOU to bridge the gap between the connectors 42 and 44 of the digital card 41 and the transceiver 43. By relocating the connector, a common transceiver is used for the SRU and AOU. Further detail can be seen in FIG. 8, which is an exploded view of the AOU.

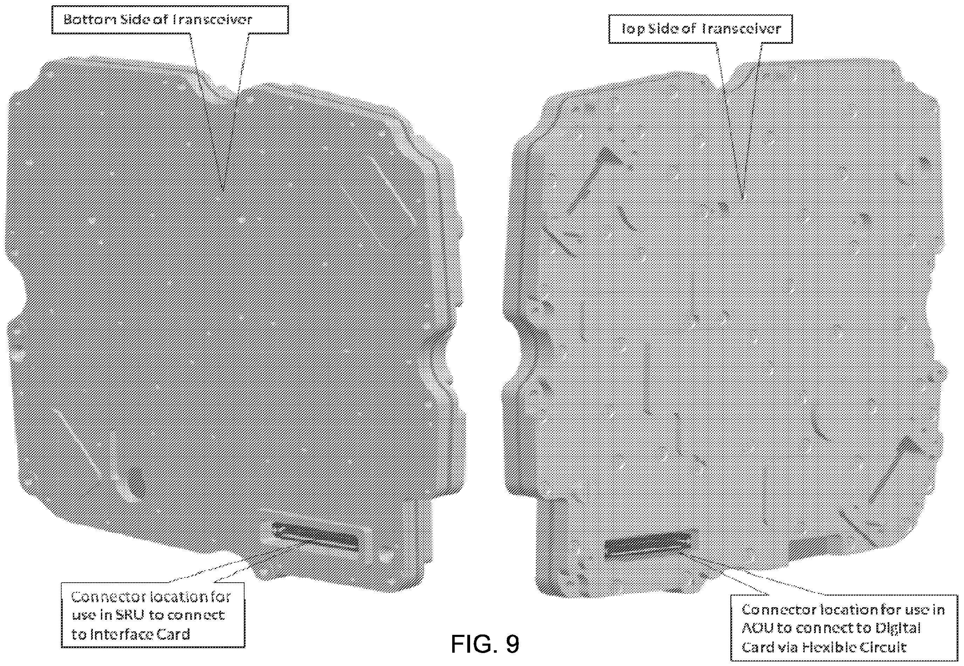

FIG. 9 depicts the top and bottom of a transceiver and the position of the connector for use in the SRU and AOU according to some implementations of the present invention. In some implementations, the present invention proposes a common diplexer for the SRU and AOU.

The common diplexer 25/45 can be seen in FIGS. 5 and 7. The transmit port and the receive port of the diplexer 25/45 connect to the transmit port and receive port of the transceiver 23/43. Since the transceiver and diplexer are both common to the SRU and AOU, the connection between the two is also common. In the SRU, the diplexer common port extends out of a hole in the SRU enclosure and connects to the antenna. For the AOU, the diplexer common port is not long enough to extend out of a hole in the AOU enclosure casting due to the location of the digital card between the diplexer and the casting and also due to the addition of cooling fins to this casting. In order to utilize a common diplexer a Waveguide Extension is added. This extension is a passive component that bridges the distance between the diplexer and the antenna. Further detail can be seen in Figures 6 and 8.

In some implementations, the present invention proposes a common antenna interface and a common mounting mechanics for the SRU and AOU.

The common antenna 30 can be seen in FIGS. 5 and 7. The common port of the diplexer connects to the antenna to pass the transmit and the receive signals between the antenna and the SRU and AOU. This connection is a waveguide connection. For the SRU, the antenna feed mates directly to the diplexer through the opening in the casting for the diplexer common port. For the AOU, the antenna feed mates to the waveguide extension which mates to the diplexer. Refer to Figures 6 and 8 for more detail. The SRU casting has four mounting posts that are used to mount the SRU to the antenna using screws. The AOU has four similar mounting posts that are in the same location relative to the antenna feed interface as on the SRU. This configuration allows the use of a common antenna interface and common mounting mechanics for the SRU and AOU.

In some implementations, the present invention proposes common software and common control for SRU and AOU

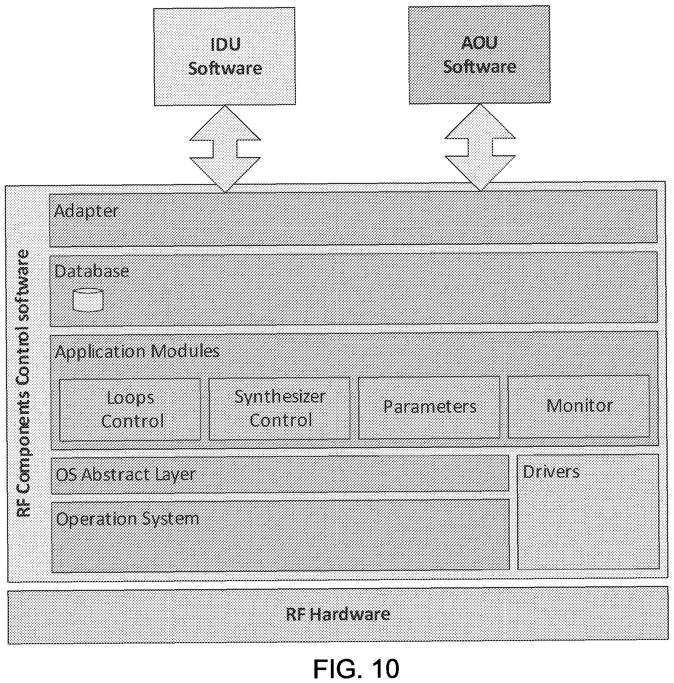

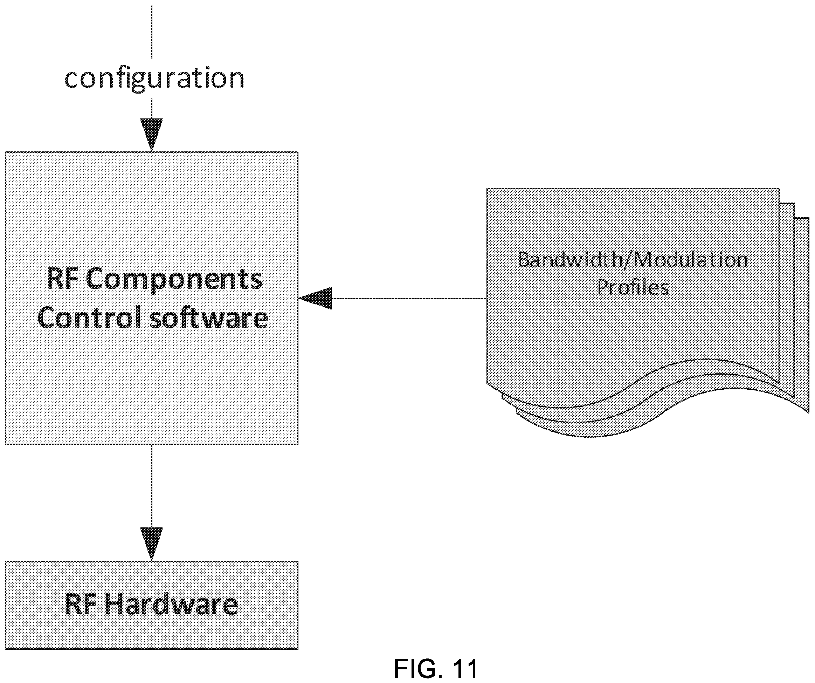

FIG. 10 depicts a block diagram of RF components control software according to some implementations of the present invention. The RF components control software controls RF Hardware and provides generic interface for system configuration. Software design includes following key points:
a. Design isolates Application Modules from Operation System by using OS Abstract Layer as shown in FIG. 10, so RF Components Control Software can use different Operation Systems as a base in case of AOU and SRU. It is usually required since complexity of AOU and IDU software is different.
b. Adapter module implements generic interface for communication with IDU via telemetry channel in case of ODU or with other modules outside RF Components Control Software in case of AOU via inter-task communication mechanism.
c. All bandwidth and modulation dependant data like, maximum power level, attenuation ranges for attenuators, correction factors for detectors reading, etc. are stored separately from RF Components Control Software in form of Bandwidth/Modulation Profiles. Profiles can be updated separately from the software that simplifies software development and maintenance. For better system resources utilization, dedicated Parameter module loads only one particular profile for current configuration as shown on FIG. 11. Each frequency band has its own set of Bandwidth/Modulation Profiles, so as soon as new band hardware design follows common system architecture, only new set of Bandwidth/Modulation Profiles needs to be introduced to make software support new hardware. No changes in RF Components Control Software are required.

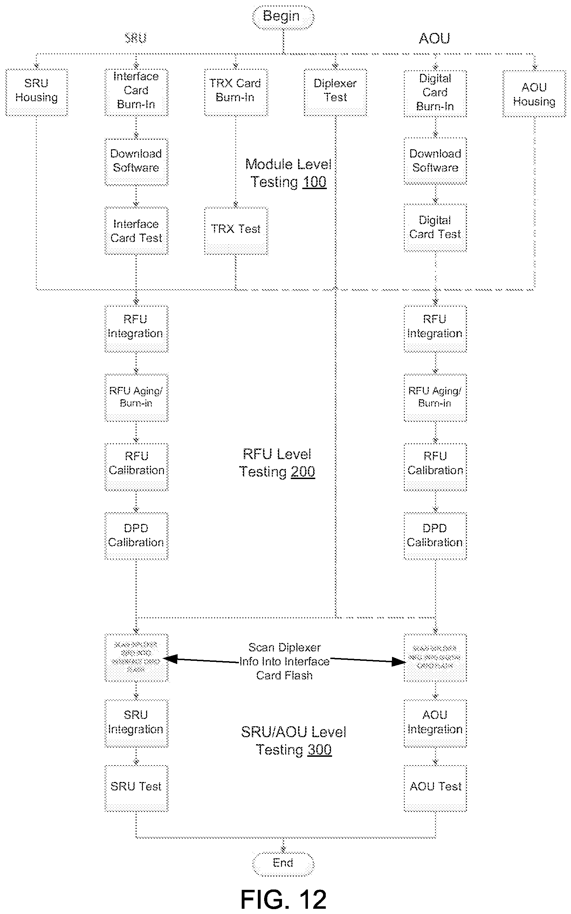

In some implementations, the present invention proposes a common calibration routine, common Automatic Test Equipment (ATE) and common test flow for both SRU and AOU. FIG. 12 depicts a flow chart illustrating a testing and integration workflow for both the SRU and the AOU according to some implementations of the present invention. SRU includes four basic parts, diplexer, transceiver (TRX), interface card and SRU mechanics. Diplexer, TRX and INFC first go through module own pass/fail test station, then TRX, INFC and SRU mechanics integrated together as a Radio Frequency Unit (RFU), RFU goes through RF and DPD calibration, then integrated with diplexer becomes a frequency band dependent part and go through final SRU test flow. AOU has the similar test flow, and sharing TRX and diplexer exactly with SRU.

ATE flow chart includes the following key ideas:
a. TRX and Diplexer designed mechanically, electronically and tested for both SRU and AOU families
b. TRX module test and calibration includes regular RF pass/fail test, RF calibration at room temperature, then applies correction factors for temperature range, which covers from -33°C to +55°C, frequency range, output power, 30dB dynamic range for Pout and 70dB dynamic range for the receiver, various BW, from 5Mhz up to 56MHz, and various modulation from QPSK up to 1024QAM.
c. TRX module performs the open loop digital pre-distortion (DPD) calibration at room temperature, then applies correction factor for temperature range, various output power levels, various frequency, various bandwidth and various baud rates.
d. TRX RF and DPD calibration data stored in the local EEprom, and data will be used during radio operation per radio setting and automatically adjusted per on board temperature sensor, frequency, power level, bandwidth and capacity.

Compared with traditional SRU and AOU architecture, the flexible and unified radio architecture design of the present application has the following key advantages:
a. Within the SRU family, the common interface card is used for all frequency bands. The typical license band includes frequency band of 6GHz, 7GHz, 8GHz, 10GHz, 11GHz, 13GHz, 15GHz, 18GHz, 23GHz, 26GHz, 28GHz, 32GHz, 38GHz and 42GHz.
b. Within the AOU family, the common digital card is used for all frequency bands. The same frequency bands apply to SRU.
c. The common diplexer is used for both SRU and AOU platforms.
d. The common transceiver is used for both SRU and AOU platforms.
e. The common software is used within the SRU platform and the AOU platform.
f. The common software engine with different drivers between SRU and AOU platforms.
g. The common mechanics is used within the SRU platform and the AOU platform.
h. The common antenna interface is used for both the SRU and AOU platforms.
i. The common mounting mechanism is used for both the SRU and AOU platforms.
j. The common key TRX RF and DPD calibration routine is used for both the SRU and AOU platforms.
k. The common test flow and integration flow is used for both the SRU and AOU platforms
l. Many unique features designed in transceivers including integrated APD/DPD, down converted high dynamic linear temperature compensated RF detection, integrated RF loopback, smart PA bias setting, and common reference for hitless and coherent features.

Overall, the architecture of the SRU and AOU is to enable the use of components and circuitry on the transceiver for both the SRU and AOU. This design conserves valuable area on the transceiver and allows the transceiver size to be minimized. Cost savings are also realized by reducing mechanical component sizes. The use of a common transceiver, diplexer, and antenna greatly reduces the number of unique components that must be designed, tested, and stocked. This reduction significantly reduces the time to market and design resources required. Economies of scale are realized in manufacturing since the volume of the common assemblies is increased.

In some implementations, the above-described methods and their variations may be implemented as computer software instructions or firmware instructions. Such instructions may be stored in an article with one or more machine-readable storage devices connected to one or more computers or integrated circuits or digital processors such as digital signal processors, microprocessors, or micro-control units (MCU), and the instructions may perform the transmission method for transmitting MTC data. In addition, the method may be applied to any MTC capable mobile communications device supporting the WCDMA technology and/or the LTE technology. Other variations and enhancements are possible based on what is mentioned here.

Although the terms first, second, etc. may be used herein to describe various elements, these elements should not be limited by these terms. These terms are only used to distinguish one element from another. The terminology used in the description of the invention herein is for the purpose of describing particular implementations only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

## Claims

1. A transceiver (23, 43) used in a radio unit for wireless communication, comprising:
a circuitry board including a transmitter and a receiver;
a first connector (22) on a first side of the circuitry board;
a second connector (44) on a second side of the circuitry board, wherein the second side is opposite the first side; and
a pair of transmit port and receive port located on the second side of the circuitry board,
wherein the first connector (22) is configured to be connected to a connector (21-1) of an interface card (21) external to the transceiver (23, 43),
the second connector (44) is configured to be connected to a connector (42) of a digital card (41) via a flexible circuit (46), and
the first connector and the second connector are configured not to be in use at the same time; and
the transmit port is coupled to the transmitter and the receive port coupled to the receiver, respectively.

2. The transceiver of claim 1, wherein, when the transceiver is part of a split-mount radio unit, the first connector (22) is connected to the interface card (21) and the second connector (44) is not in use.

3. The transceiver of any of claims 1 to 2, wherein, when the transceiver is part of an all-outdoor radio unit, the second connector (44) is connected to the digital card (41) and the first connector (22) is not in use.

4. The transceiver of any of claims 1 to 3, wherein the first connector (22) and the second connector (44) have mirror-imaged locations on the first and second sides of the circuitry board.

5. The transceiver of any of claims 1 to 4, wherein the pair of transmit port and receive port are configured to be connected to a pair of transmit port and receive port of a diplexer (25, 45).

6. The transceiver of any of claims 1 to 5, wherein the transmitter further includes a plurality of detectors configured in a serial connection, circuitry supporting open loop digital pre-distortion and analog adaptive pre-distortion, and a power amplifier.

7. A split-mount radio unit, comprising:
an indoor unit; and
an outdoor unit that is connected to the indoor unit via a cable, wherein the outdoor unit further includes:
an enclosure including a pair of first (27) and second (29) castings, wherein the first casting (27) includes a heat sink;
an interface card (21) mounted on an inside surface of the first casting (27), wherein the interface card (21) includes a connector (21-1) on a surface opposite the inside surface of the first casting (27);
a transceiver (23) including a transmitter and a receiver on a circuitry board mounted on the inside surface of the first casting (27), wherein the transceiver (23) includes a first connector (22) on a first side of the transceiver facing the inside surface of the first casting and a second connector (44) and a pair of transmit port and receive port on a second side of the transceiver (23) opposite the first side of the transceiver (23) and the second connector (44) is configured to be connected to a digital card (41) via a flexible circuit (46), the first connector (22) is connected to the connector (21-1) of the interface card (21) and the second connector (44) is not in use and the transmit port is coupled to the transmitter and the receive port is coupled to the receiver, respectively;
a diplexer (25) including a pair of transmit port and receive port on a surface facing the second side of the transceiver (23) and a common port (25-1) on an opposite surface facing an inside surface of the second casting (29), wherein the pair of transmit port and receive port of the diplexer (25) are connected to the corresponding pair of transmit port and receive port of the transceiver (23); and
an antenna (30) outside the enclosure, wherein the antenna (30) includes a port connected to the common port (25-1) of the diplexer (25) through a hole (29-1) of the second casting (29).

8. The split-mount radio unit of claim 7, wherein the cable connecting the indoor unit and the outdoor unit is an RG-8 cable having a length up to 1000 feet.

9. The split-mount radio unit of any of claims 7 to 8, wherein the first connector (22) and the second connector (44) have mirror-imaged locations on the first and second sides of the transceiver.

## Patentansprüche

1. Transceiver (23, 43), der in einer Funkeinheit zur drahtlosen Kommunikation verwendet wird, umfassend:
eine Schaltungsplatine, die einen Sender und einen Empfänger aufweist;
einen ersten Verbinder (22) auf einer ersten Seite der Schaltungsplatine;
einen zweiten Verbinder (44) auf einer zweiten Seite der Schaltungsplatine, wobei die zweite Seite der ersten Seite gegenüberliegt; und
ein Paar eines Sendeanschlusses und eines Empfangsanschlusses, das sich auf der zweiten Seite der Schaltungsplatine befindet,
wobei der erste Verbinder (22) konfiguriert ist, mit einem zweiten Verbinder (21-1) einer Schnittstellenkarte (21) verbunden zu werden, die außerhalb des Transceivers (23, 43) liegt,
der zweite Verbinder (44) konfiguriert ist, mit einem Verbinder (42) einer digitalen Karte (41) durch eine flexible Schaltung (46) verbunden zu werden, und
der erste Verbinder und der zweite Verbinder konfiguriert sind, nicht gleichzeitig in Gebrauch zu sein; und
der Sendeanschluss mit dem Sender gekoppelt ist bzw. der Empfangsanschluss mit dem Empfänger gekoppelt ist.

2. Transceiver nach Anspruch 1, wobei, wenn der Transceiver Teil einer Split-Mount-Funkeinheit ist, der erste Verbinder (22) mit der Schnittstellenkarte (21) verbunden ist und der zweite Verbinder (44) nicht in Gebrauch ist.

3. Transceiver nach einem der Ansprüche 1 bis 2, wobei, wenn der Transceiver Teil einer All-Outdoor-Funkeinheit ist, der zweite Verbinder (44) mit der digitalen Karte (41) verbunden ist und der erste Verbinder (22) nicht in Gebrauch ist.

4. Transceiver nach einem der Ansprüche 1 bis 3, wobei der erste Verbinder (22) und der zweite Verbinder (44) spiegelbildliche Positionen auf der ersten und der zweiten Seite der Schaltungsplatine aufweisen.

5. Transceiver nach einem der Ansprüche 1 bis 4, wobei das Paar eines Sendeanschlusses und eines Empfangsanschlusses konfiguriert ist, mit einem Paar eines Sendeanschlusses und eines Empfangsanschlusses eines Diplexers (25, 45) verbunden zu werden.

6. Transceiver nach einem der Ansprüche 1 bis 5, wobei der Sender ferner eine Mehrzahl von Detektoren, die in einer seriellen Verbindung konfiguriert sind, eine Schaltung, die eine digitale Vorverzerrung mit offenem Regelkreis und eine analoge adaptive Vorverzerrung unterstützt, und einen Leistungsverstärker aufweist.

7. Split-Mount-Funkeinheit, umfassend:
eine Indoor-Einheit; und
eine Outdoor-Einheit, die mit der Indoor-Einheit durch ein Kabel verbunden ist, wobei die Outdoor-Einheit ferner Folgendes aufweist:
ein Gehäuse, das ein Paar erster (27) und zweiter (29) Gussteile aufweist, wobei das erste Gussteil (27) eine Wärmesenke aufweist;
eine Schnittstellenkarte (21), die an einer inneren Oberfläche des ersten Gussteils (27) befestigt ist, wobei die Schnittstellenkarte (21) einen Verbinder (21-1) auf einer Oberfläche aufweist, die der inneren Oberfläche des ersten Gussteils (27) gegenüberliegt;
einen Transceiver (23), der einen Sender und einen Empfänger auf einer Schaltungsplatine aufweist, die auf der inneren Oberfläche des ersten Gussteils (27) befestigt ist, wobei der Transceiver (23) einen ersten Verbinder (22) auf einer ersten Seite des Transceivers, die zur inneren Oberfläche des ersten Gussteils weist, und einen zweiten Verbinder (44) und ein Paar eines Sendeanschlusses und eines Empfangsanschlusses auf einer zweiten Seite des Transceivers (23) aufweist, die der ersten Seite des Transceivers (23) gegenüberliegt, und der zweite Verbinder (44) konfiguriert ist, mit einer digitalen Karte (41) durch eine flexible Schaltung (46) verbunden zu werden, wobei der erste Verbinder (22) mit dem Verbinder (21 -1) der Schnittstellenkarte (21) verbunden ist und der zweite Verbinder (44) nicht in Gebrauch ist und der Sendeanschluss mit dem Sender gekoppelt ist bzw. der Empfangsanschluss mit dem Empfänger gekoppelt ist;
eine Diplexer (25), der ein Paar eines Sendeanschlusses und eines Empfangsanschlusses auf einer Oberfläche, die zur zweiten Seite des Transceivers (23) weist, und einen gemeinsamen Anschluss (25-1) auf einer gegenüberliegenden Oberfläche aufweist, die zu einer inneren Oberfläche des zweiten Gussteils (29) weist, wobei das Paar eines Sendeanschlusses und eines Empfangsanschlusses des Diplexers (25) mit dem entsprechenden Paar eines Sendeanschlusses und eines Empfangsanschlusses des Transceivers (23) verbunden ist; und
eine Antenne (30) außerhalb des Gehäuses, wobei die Antenne (30) einen Anschluss aufweist, der mit dem gemeinsamen Anschluss (25-1) des Diplexers (25) durch ein Loch (29-1) des zweiten Gussteils (29) verbunden ist.

8. Split-Mount-Funkeinheit nach Anspruch 7, wobei das Kabel, das die Indoor-Einheit und die Outdoor-Einheit verbindet, ein RG-8-Kabel mit einer Länge von bis zu 1000 Fuß ist.

9. Split-Mount-Funkeinheit nach einem der Ansprüche 7 bis 8, wobei der erste Verbinder (22) und der zweite Verbinder (44) spiegelbildliche Positionen auf der ersten und der zweiten Seite des Transceivers aufweisen.

## Revendications

1. Emetteur-récepteur (23, 43) utilisé dans une unité radio pour une communication sans fil, comprenant :
une carte de circuiterie comprenant un émetteur et un récepteur ;
un premier connecteur (22) sur un premier côté de la carte de circuiterie ;
un deuxième connecteur (44) sur un deuxième côté de la carte de circuit, dans lequel le deuxième côté est à l'opposé du premier côté ; et
une paire de port de transmission et de port de réception situés sur le deuxième côté de la carte de circuiterie,
dans lequel le premier connecteur (22) est configuré pour être raccordé à un connecteur (21-1) d'une carte d'interface (21) à l'extérieur de l'émetteur-récepteur (23, 43),
le deuxième connecteur (44) est configuré pour être raccordé à un connecteur (42) d'une carte numérique (41) par l'intermédiaire d'un circuit souple (46), et
le premier connecteur et le deuxième connecteur sont configurés pour ne pas être en utilisation en même temps ; et
le port de transmission est couplé à l'émetteur et respectivement le port de réception est couplé au récepteur.

2. Emetteur-récepteur selon la revendication 1, dans lequel, lorsque l'émetteur-récepteur fait partie d'une unité radio à montage séparé, le premier connecteur (22) est raccordé à la carte d'interface (21) et le deuxième connecteur (44) n'est pas en utilisation.

3. Emetteur-récepteur selon l'une quelconque des revendications 1 et 2, dans lequel, lorsque l'émetteur-récepteur fait partie d'une unité radio extérieure, le deuxième connecteur (44) est raccordé à la carte numérique (41) et le premier connecteur (22) n'est pas en utilisation.

4. Emetteur-récepteur selon l'une quelconque des revendications 1 à 3, dans lequel le premier connecteur (22) et le deuxième connecteur (44) ont des emplacements en miroir sur les premier et deuxième côtés de la carte de circuiterie.

5. Emetteur-récepteur selon l'une quelconque des revendications 1 à 4, dans lequel la paire de port de transmission et de port de réception sont configurés pour être raccordés à une paire de port de transmission et de port de réception d'un duplexeur (25, 45).

6. Emetteur-récepteur selon l'une quelconque des revendications 1 à 5, dans lequel l'émetteur comprend en outre une pluralité de détecteurs configurés dans un raccordement série, la circuiterie prenant en charge une prédistorsion numérique en boucle ouverte et une prédistorsion adaptative analogique, et un amplificateur de puissance.

7. Unité radio à montage séparé, comprenant :
une unité intérieure ; et
une unité extérieure qui est raccordée à l'unité intérieure par l'intermédiaire d'un câble, dans laquelle l'unité extérieure comprend en outre :
une enceinte comprenant une paire d'un premier moulage (27) et d'un deuxième moulage (29), dans laquelle le premier moulage (27) comprend un dissipateur de chaleur ;
une carte d'interface (21) montée sur une surface intérieure du premier moulage (27), dans laquelle la carte d'interface (21) comprend un connecteur (21-1) sur une surface à l'opposé de la surface intérieure du premier moulage (27) ;
un émetteur-récepteur (23) comprenant un émetteur et un récepteur sur une carte de circuiterie montée sur la surface intérieure du premier moulage (27), dans lequel l'émetteur-récepteur (23) comprend un premier connecteur (22) sur un premier côté de l'émetteur-récepteur faisant face à la surface intérieure du premier moulage et un deuxième connecteur (44), et une paire de port de transmission et de port de réception sur un deuxième côté de l'émetteur-récepteur (23) à l'opposé du premier côté de l'émetteur-récepteur (23) et le deuxième connecteur (44) est configuré pour être raccordé à une carte numérique (41) par l'intermédiaire d'un circuit souple (46), le premier connecteur (22) est raccordé au connecteur (21-1) de la carte d'interface (21) et le deuxième connecteur (44) n'est pas en utilisation, et le port de transmission est couplé à l'émetteur et respectivement le port de réception est couplé au récepteur ;
un duplexeur (25) comprenant une paire de port de transmission et de port de réception sur une surface faisant face au deuxième côté de l'émetteur-récepteur (23) et un port commun (25-1) sur une surface opposée faisant face à une surface intérieure du deuxième moulage (29), dans laquelle la paire de port de transmission et de port de réception du duplexeur (25) sont raccordés à la paire correspondante de port de transmission et de port de réception de l'émetteur-récepteur (23) ; et
une antenne (30) à l'extérieur de l'enceinte, dans laquelle l'antenne (30) comprend un port raccordé au port commun (25-1) du duplexeur (25) par l'intermédiaire d'un trou (29-1) du deuxième moulage (29).

8. Unité radio à montage séparé selon la revendication 7, dans laquelle le câble raccordant l'unité intérieure et l'unité extérieure est un câble RG-8 ayant une longueur jusqu'à 1000 pieds.

9. Unité radio à montage séparé selon l'une quelconque des revendications 7 et 8, dans laquelle le premier connecteur (22) et le deuxième connecteur (44) ont des emplacements en miroir sur les premier et deuxième côtés de l'émetteur-récepteur.
